# EUROPEAN PATENT SPECIFICATION

(11) **EP 4 492 707 B1**
(45) Date of publication and mention of the grant of the patent: **28.10.2026**
(21) Application number: 23778503.5
(22) Date of filing: 31.03.2023
(51) Int. Cl.: H04B 10/548, H04B 10/2513, H04J 14/02, H04J 14/06, H04B 10/2563

(54) **OPTICAL COMMUNICATION METHOD, APPARATUS AND SYSTEM**
OPTISCHES KOMMUNIKATIONSVERFAHREN, VORRICHTUNG UND SYSTEM
PROCÉDÉ, APPAREIL ET SYSTÈME DE COMMUNICATIONS OPTIQUES

(30) Priority: 31.03.2022 CN 202210333073; 24.06.2022 CN 202210726364
(43) Date of publication of application: 15.01.2025
(73) Proprietor: Huawei Technologies Co., Ltd., Shenzhen, Guangdong 518129 (CN)
(72) Inventor: MI, Guangcan, Shenzhen, Guangdong 518129 (CN); LIU, Xiang, Shenzhen, Guangdong 518129 (CN)
(74) Representative: Körber, Martin Hans
(86) International application number: PCT/CN2023/085671
(87) International publication number: WO 2023/186139

(56) References cited:
- CN-A- 101 795 159
- CN-A- 114 095 114
- US-A1- 2020 382 217
- US-B1- 6 459 515
- US-B1- 8 503 881
- LIU XIANG ET AL: "Inter-Channel FWM Mitigation Techniques for O-band WDM Based 800G/1.6T LR and 5G Fronthaul Applications", 2023 OPTICAL FIBER COMMUNICATIONS CONFERENCE AND EXHIBITION (OFC), OSA, 5 March 2023 (2023-03-05), pages 1 - 3, XP034345291, DOI: 10.23919/OFC49934.2023.10117405
- INOUE, K.: "Arrangement of orthogonal polarized signals for suppressing fiber four-wave mixing in optical multichannel transmission systems", IEEE PHOTONICS TECHNOLOGY LETTERS, vol. 3, no. 6, 30 June 1991 (1991-06-30), XP000227356, DOI: 10.1109/68.91035

## Description

### TECHNICAL FIELD

This application relates to the field of optical communication, and in particular, to an optical communication method, apparatus, and system.

### BACKGROUND

An optical communication system generally transmits an optical signal through an optical fiber. To reduce a dispersion penalty, a frequency of a wavelength division multiplexing (wavelength division multiplexing, WDM) optical signal may be configured near a zero-dispersion frequency (zero-dispersion frequency, ZDF) of the optical fiber. However, the WDM optical signal near the ZDF has a severe four-wave mixing effect. The four-wave mixing effect degrades performance of the optical communication system. Impact of the four-wave mixing effect on the performance of the optical communication system is related to a power of the WDM optical signal. To suppress a four-wave mixing phenomenon, a transmit power of the WDM optical signal may be reduced. However, reducing the transmit power of the WDM optical signal causes a power margin of the WDM optical signal to be reduced. The power margin affects reliability of the optical communication system.

In conclusion, how to reduce the four-wave mixing effect in the optical communication system is a technical problem that urgently needs to be resolved currently.

US 2020/0382217 Al discloses a coherent optical receiver and an associated optical transmitter. The optical transmitter comprises four modulators to modulate light propagating therein in amplitude, wherein light from a first laser emitting at a first wavelength is split and sent in parallel to the first and the second modulator, light from a second laser emitting at a second wavelength is split and sent in parallel to the third and the fourth modulator, outputs of the first and the third modulator are wavelength multiplexed using a first wavelength multiplexer, outputs of the second and the fourth modulator are wavelength multiplexed using a second wavelength multiplexer, and outputs of the first and the second wavelength multiplexer are polarization multiplexed to obtain a signal light. The first and second wavelength may be near a zero dispersion region of a single mode fiber.

US 6,459,515 B1 discloses a method and an apparatus for transmitting a WDM optical signal having states of polarization that are pairwise orthogonal. The optical signal includes a total number of channels that are dividable into a prescribed number of wavebands. The method includes generating a first series of optical signals corresponding to each of the wavebands, The first series of optical signals includes a series of optical channels that are sequentially numbered from 1 to N from lowest to highest wavelength. Within each waveband, a state of polarization of predetermined odd-numbered channels is oriented to be substantially orthogonal to a state of polarization of predetermined even-numbered channels. The predetermined odd-numbered channels and the predetermined even-numbered channels are combined, respectively, by a first and a second polarization maintaining WDM coupler, and the outputs of the first and the second polarization maintaining WDM coupler are polarization combined by a polarization combiner.

### SUMMARY

This application provides an optical communication method, apparatus, and system. Optical signals with different polarizations are configured within a ZDF region, to reduce impact of a four-wave mixing effect. The present invention is defined by the enclosed claims. In the following description, embodiments which are not covered by the clams are to be considered as examples necessary for understanding the invention.

A first aspect of this application provides an optical communication method. The optical communication method may be applied to a transmit end. The optical communication method includes the following steps: The transmit end obtains a wavelength division multiplexing optical signal. The wavelength division multiplexing optical signal includes N pairs of optical signals. Each pair of optical signals includes a first optical signal and a second optical signal that are of different wavelengths and whose polarizations are orthogonal to each other. Each optical signal is a single-polarization optical signal. N is an integer greater than 1. A frequency of at least one of N first optical signals and a frequency of at least one of N second optical signals are within a ZDF region of an
optical fiber. A ZDF of the optical fiber corresponds to a zero-dispersion wavelength (zero-dispersion wavelength, ZDW) of the optical fiber. Therefore, the ZDF region also has a corresponding ZDW region. In this case, a wavelength of at least one of the N first optical signals and a wavelength of at least one of the N second optical signals are within the ZDW region of the optical fiber. The transmit end sends the wavelength division multiplexing optical signal through the optical fiber.

In this application, the wavelength division multiplexing optical signal within the ZDF region includes optical signals whose polarizations are orthogonal. A four-wave mixing effect produced between the optical signals whose polarizations are orthogonal is low. Therefore, in this application, impact of the four-wave mixing effect can be reduced.

In an optional manner of the first aspect, at least two optical signals with different polarizations are included between two adjacent optical signals with a same polarization in the wavelength division multiplexing optical signal. For example, two second optical signals are included between two adjacent first optical signals, or two first optical signals are included between two adjacent second optical signals. When a frequency spacing between adjacent frequencies in the wavelength division multiplexing optical signal is M gigahertz (Gigahertz, GHz), a frequency spacing between adjacent frequencies of at least one pair of optical signals of optical signals with a same polarization in the wavelength division multiplexing optical signal is K×M GHz. K is an integer greater than 2. When the first optical signal and the second optical signal are alternately distributed, the four-wave mixing effect may still be produced among four optical signals with a same polarization. In this application, the frequency spacing is adjusted by adjusting a polarization order of each pair of optical signals, so that the at least two optical signals with different polarizations are included between the two adjacent optical signals with the same polarization, to avoid alternate distribution of the first optical signal and the second optical signal. Therefore, in this application, impact of the four-wave mixing effect may be further reduced.

In an optional manner of the first aspect, any four optical signals of optical signals with a same polarization in the wavelength division multiplexing optical signal satisfy the following conditions: B1+B4-B2-B3=B, and B is not equal to 0. For ease of description, the foregoing formula is referred to as a first condition. The any four optical signals are sequentially sorted based on values of frequencies. The frequencies of the any four optical signals are sequentially B1, B2, B3, and B4. A value of (B2+B3)/2 is within the ZDF region. Near the ZDF, when B1+B4-B2-B3=0, the most severe four-wave mixing effect is produced among the four optical signals. In this application, the most severe four-wave mixing effect may be avoided by adjusting the frequency spacing. Therefore, in this application, impact of the four-wave mixing effect can be reduced.

In an optional manner of the first aspect, B4-B1=B0. A value of B0 is less than 4.5 tera hertz (Tera Hertz, THz). In order to improve a communication bandwidth, optical signals with different frequencies may be used in the WDM optical signal. When the used frequencies are sufficient, the four optical signals easily satisfy the first condition. However, if a frequency spacing between B1 and B4 of the four optical signals is large enough, impact of the four-wave mixing effect is low. Therefore, in this application, for the four optical signals with low impact of the four-wave mixing effect, the frequency spacing may not need to be adjusted, thereby reducing complexity of adjusting the frequency spacing.

In an optional manner of the first aspect, frequency spacings of any three optical signals of optical signals with a same polarization in the wavelength division multiplexing optical signal are different. That the frequency spacings of the any three optical signals are different means that frequency spacings between adjacent frequencies of the any three optical signals are different. The any three optical signals are sequentially sorted based on values of frequencies. The frequencies of the any three optical signals are sequentially B5, B6, and B7. B5+B7-2×B6=B8. When the frequency spacings of the any three optical signals are different, B8 is not equal to 0. When the frequency spacings of the any three optical signals are the same, B8 is equal to 0. Frequencies of at least two of the any three optical signals are within the ZDF region. Near the ZDF, a degenerate four-wave mixing effect may also be produced among the three optical signals with the same frequency spacing. In this application, the degenerate four-wave mixing effect produced among the three optical signals may be avoided by adjusting the frequency spacing. Therefore, in this application, impact of the four-wave mixing effect can be reduced.

In an optional manner of the first aspect, the optical communication method further includes the following steps: The transmit end performs beam combination on the N pairs of optical signals by using N polarization-division multiplexers (Polarization-division multiplexers, PDMs), to obtain N beam-combined optical signals. The N pairs of optical signals are in one-to-one correspondence with the N PDMs. The transmit end performs beam combination on the N beam-combined optical signals by using a wavelength division multiplexer, to obtain the wavelength division multiplexing optical signal. A quantity of wavelength division multiplexers may be reduced by first performing polarization beam combination and then performing multiplexing. In addition, costs of the PDM are far less than costs of the wavelength division multiplexer. Therefore, in this application, costs of the transmit end may be reduced.

In an optional manner of the first aspect, frequencies of each of the N pairs of optical signals are adjacent. When the frequencies of each pair of optical signals are not adjacent, a cross-frequency filter is configured at an input port of the wavelength division multiplexer, resulting in an increase in costs of the wavelength division multiplexer. However, in this application, the costs of the wavelength division multiplexer may be reduced. In addition, when the frequencies of each pair of optical signals are not adjacent, optical signals with different polarizations may have different polarization deflections. Polarizations of the first optical signal and the second optical signal are not orthogonal due to the different polarization deflections, resulting in the four-wave mixing effect. Therefore, in this application, impact of the four-wave mixing effect can be reduced.

In an optional manner of the first aspect, N is 2. Based on a wavelength order, a polarization arrangement of the N pairs of optical signals is XYYX or YXXY. A spacing between any two adjacent optical signals of the N pairs of optical signals is the same. Impact of the four-wave mixing effect can be greatly reduced by controlling the polarization arrangement of the N pairs of optical signals. X represents an X polarization, and Y represents a Y polarization.

In an optional manner of the first aspect, a total transmission rate of the N pairs of optical signals is 400 or 800 gigabits per second (gigabits per second, Gb/s).

In an optional manner of the first aspect, N is 4. Based on a wavelength order, a polarization arrangement of the N pairs of optical signals is XYYXYXXY, YXXYXYYX, XYYXXYYX, or YXXYYXXY. Impact of the four-wave mixing effect can be greatly reduced by controlling the polarization arrangement of the N pairs of optical signals.

In an optional manner of the first aspect, a total transmission rate of the N pairs of optical signals is 0.8 or 1.6 terabits per second (terabits per second, Tb/s).

In an optional manner of the first aspect, a frequency spacing between adjacent frequencies of the N pairs of optical signals is 400 GHz or 800 GHz.

In an optional manner of the first aspect, frequencies of the N pairs of optical signals include two frequencies in a local area network wavelength division multiplexing LAN WDM system. The two frequencies are respectively 229.8 THz and 229 THz.

In an optional manner of the first aspect, the frequencies of the N pairs of optical signals further include 231.4 THz and 230.6 THz.

A second aspect of this application provides an optical communication apparatus. The optical communication apparatus includes N PDMs and a wavelength division multiplexer. The N PDMs are configured to perform beam combination on N pairs of optical signals, to obtain N beam-combined optical signals. N is an integer greater than 1. The N pairs of optical signals are in one-to-one correspondence with the N PDMs. Each of the N beam-combined optical signals includes a first optical signal and a second optical signal that are of different wavelengths and whose polarizations are orthogonal to each other. A frequency of at least one of N first optical signals and a frequency of at least one of N second optical signals are within a ZDF region of an optical fiber. The wavelength division multiplexer is configured to perform beam combination on the N beam-combined optical signals, to obtain a wavelength division multiplexing optical signal. The wavelength division multiplexer is configured to transmit the wavelength division multiplexing optical signal through the optical fiber.

In an optional manner of the second aspect, at least two optical signals with different polarizations are included between two adjacent optical signals with a same polarization in the wavelength division multiplexing optical signal. In an optional manner of the second aspect, any four optical signals of optical signals with a same polarization in the wavelength division multiplexing optical signal satisfy the following conditions: B1+B4-B2-B3=B, and B is not equal to 0. The any four optical sub-signals are sequentially sorted based on values of frequencies. The frequencies of the any four optical sub-signals are sequentially B1, B2, B3, and B4. A value of (B2+B3)/2 is within the ZDF region.

In an optional manner of the second aspect, B4-B1=B0. A value of B0 is less than 4.5 THz.

In an optional manner of the second aspect, frequency spacings of any three optical signals of optical signals with a same polarization in the wavelength division multiplexing optical signal are different. Frequencies of at least two of the any three optical signals are within the ZDF region.

In an optional manner of the second aspect, frequencies of each of the N pairs of optical signals are adjacent.

In an optional manner of the second aspect, the wavelength division multiplexer is a polarization-independent non-polarization maintaining wavelength division multiplexer. When the optical communication apparatus obtains the wavelength division multiplexing optical signal by first performing multiplexing and then performing polarization beam combination, the wavelength division multiplexer is a polarization-maintaining wavelength division multiplexer. If the wavelength division multiplexer is a polarization-independent wavelength division multiplexer, a large loss is generated when the optical communication apparatus performs polarization beam combination. In this application, the wavelength division multiplexing optical signal is obtained by first performing polarization beam combination and then multiplexing, and the polarization-independent non-polarization maintaining wavelength division multiplexer may be used. The polarization-independent non-polarization maintaining wavelength division multiplexer does not affect a loss during polarization beam combination. In addition, costs of the polarization-independent non-polarization maintaining wavelength division multiplexer are less than costs of the polarization-maintaining wavelength division multiplexer. Therefore, in this application, costs of the optical communication apparatus can be reduced.

In an optional manner of the second aspect, N is 2. Based on a wavelength order, a polarization arrangement of the N pairs of optical signals is XYYX or YXXY. A spacing between any two adjacent optical signals of the N pairs of optical signals is the same. Impact of a four-wave mixing effect can be greatly reduced by controlling the polarization arrangement of the N pairs of optical signals.

In an optional manner of the second aspect, a total transmission rate of the N pairs of optical signals is 400 Gb/s or 800 Gb/s.

In an optional manner of the second aspect, N is 4. A polarization arrangement of the N pairs of optical signals is XYYXYXXY, YXXYXYYX, XYYXXYYX, or YXXYYXXY. Impact of a four-wave mixing effect can be greatly reduced by controlling the polarization arrangement of the N pairs of optical signals.

In an optional manner of the second aspect, a total transmission rate of the N pairs of optical signals is 0.8 Tb/s or 1.6 Tb/s.

In an optional manner of the second aspect, a frequency spacing between adjacent frequencies of the N pairs of optical signals is 400 GHz or 800 GHz.

In an optional manner of the second aspect, frequencies of the N pairs of optical signals include two frequencies in a local area network wavelength division multiplexing LAN WDM system. The two frequencies are respectively 229.8 THz and 229 THz.

In an optional manner of the second aspect, the frequencies of the N pairs of optical signals further include 231.4 THz and 230.6 THz.

A third aspect of this application provides an optical communication system. The optical communication system includes a transmit end and a receive end. The transmit end is connected to the receive end through an optical fiber. The transmit end is configured to transmit a wavelength division multiplexing optical signal to the receive end through the optical fiber. The wavelength division multiplexing optical signal includes N pairs of optical signals. Each pair of optical signals includes a first optical signal and a second optical signal that are of different wavelengths and whose polarizations are orthogonal to each other. N is an integer greater than 1. A frequency of at least one of N first optical signals and a frequency of at least one of N second optical signals are within a zero-dispersion frequency ZDF region of the optical fiber. The receive end is configured to receive the wavelength division multiplexing optical signal.

In an optional manner of the third aspect, at least two optical signals with different polarizations are included between two adjacent optical signals with a same polarization in the wavelength division multiplexing optical signal.

In an optional manner of the third aspect, any four optical signals of optical signals with a same polarization in the wavelength division multiplexing optical signal satisfy the following conditions: B1+B4-B2-B3=B, and B is not equal to 0. The any four optical signals are sequentially sorted based on values of frequencies. The frequencies of the any four optical signals are sequentially B1, B2, B3, and B4. A value of (B2+B3)/2 is within the ZDF region.

In an optional manner of the third aspect, B4-B1=B0. A value of B0 is less than 4.5 THz.

In an optional manner of the third aspect, frequency spacings of any three optical signals of optical signals with a same polarization in the wavelength division multiplexing optical signal are different. Frequencies of at least two of the any three optical signals are within the ZDF region.

In an optional manner of the third aspect, N is equal to N, and the transmit end is further configured to perform beam combination on the N pairs of optical signals by using N PDMs, to obtain N beam-combined optical signals. The N pairs of optical signals are in one-to-one correspondence with the N PDMs. The transmit end is further configured to perform beam combination on the N beam-combined optical signals by using a wavelength division multiplexer, to obtain the wavelength division multiplexing optical signal.

In an optional manner of the third aspect, frequencies of each of the N pairs of optical signals are adjacent.

In an optional manner of the third aspect, the wavelength division multiplexer is a polarization-independent non-polarization maintaining wavelength division multiplexer.

In an optional manner of the third aspect, N is 2. Based on a wavelength order, a polarization arrangement of the N pairs of optical signals is XYYX or YXXY. A spacing between any two adjacent optical signals of the N pairs of optical signals is the same. Impact of a four-wave mixing effect can be greatly reduced by controlling the polarization arrangement of the N pairs of optical signals.

In an optional manner of the third aspect, a total transmission rate of the N pairs of optical signals is 400 Gb/s or 800 Gb/s.

In an optional manner of the third aspect, N is 4. A polarization arrangement of the N pairs of optical signals is XYYXYXXY, YXXYXYYX, XYYXXYYX, or YXXYYXXY. Impact of a four-wave mixing effect can be greatly reduced by controlling the polarization arrangement of the N pairs of optical signals.

In an optional manner of the third aspect, a total transmission rate of the N pairs of optical signals is 0.8 Tb/s or 1.6 Tb/s.

In an optional manner of the third aspect, a frequency spacing between adjacent frequencies of the N pairs of optical signals is 400 GHz or 800 GHz.

In an optional manner of the third aspect, frequencies of the N pairs of optical signals include two frequencies in a local area network wavelength division multiplexing LAN WDM system. The two frequencies are respectively 229.8 THz and 229 THz.

In an optional manner of the third aspect, the frequencies of the N pairs of optical signals further include 231.4 THz and 230.6 THz.

A fourth aspect of this application provides a wavelength division multiplexing optical signal. The wavelength division multiplexing optical signal includes N pairs of optical signals. Each pair of optical signals includes a first optical signal and a second optical signal that are of different wavelengths and whose polarizations are orthogonal to each other. N is an integer greater than 1. A frequency of at least one of N first optical signals and a frequency of at least one of N second optical signals are within a ZDF region of an optical fiber.

In an optional manner of the fourth aspect, at least two optical signals with different polarizations are included between two adjacent optical signals with a same polarization in the wavelength division multiplexing optical signal.

In an optional manner of the fourth aspect, any four optical signals of optical signals with a same polarization in the wavelength division multiplexing optical signal satisfy the following conditions: B1+B4-B2-B3=B, and B is not equal to 0. The any four optical signals are sequentially sorted based on values of frequencies. The frequencies of the any four optical signals are sequentially B1, B2, B3, and B4. A value of (B2+B3)/2 is within the ZDF region.

In an optional manner of the fourth aspect, B4-B1=B0. A value of B0 is less than 4.5 THz.

In an optional manner of the fourth aspect, frequency spacings of any three optical signals of optical signals with a same polarization in the wavelength division multiplexing optical signal are different. The frequencies of at least two of the any three optical signals are within the ZDF region.

In an optional manner of the fourth aspect, N is 2. Based on a wavelength order, a polarization arrangement of the N pairs of optical signals is XYYX or YXXY. A spacing between any two adjacent optical signals of the N pairs of optical signals is the same. Impact of a four-wave mixing effect can be greatly reduced by controlling the polarization arrangement of the N pairs of optical signals.

In an optional manner of the fourth aspect, N is 4. A polarization arrangement of the N pairs of optical signals is XYYXYXXY, YXXYXYYX, XYYXXYYX, or YXXYYXXY. Impact of a four-wave mixing effect can be greatly reduced by controlling the polarization arrangement of the N pairs of optical signals.

In an optional manner of the fourth aspect, a frequency spacing between adjacent frequencies of the N pairs of optical signals is 400 GHz or 800 GHz.

In an optional manner of the fourth aspect, frequencies of the N pairs of optical signals include two frequencies in a local area network wavelength division multiplexing LAN WDM system. The two frequencies are respectively 229.8 THz and 229 THz.

In an optional manner of the fourth aspect, the frequencies of the N pairs of optical signals further include 231.4 THz and 230.6 THz.

### BRIEF DESCRIPTION OF DRAWINGS

FIG. 1 is a schematic distribution diagram of a wavelength division multiplexing optical signal;
FIG. 2 is a schematic flowchart of an optical communication method according to an embodiment of this application;
FIG. 3 is a first schematic distribution diagram of a wavelength division multiplexing optical signal according to an embodiment of this application;
FIG. 4 is a second schematic distribution diagram of a wavelength division multiplexing optical signal according to an embodiment of this application;
FIG. 5 is a third schematic distribution diagram of a wavelength division multiplexing optical signal according to an embodiment of this application;
FIG. 6 is a fourth schematic distribution diagram of a wavelength division multiplexing optical signal according to an embodiment of this application;
FIG. 7 is a fifth schematic distribution diagram of a wavelength division multiplexing optical signal according to an embodiment of this application;
FIG. 8 is a sixth schematic distribution diagram of a wavelength division multiplexing optical signal according to an embodiment of this application;
FIG. 9 is a seventh schematic distribution diagram of a wavelength division multiplexing optical signal according to an embodiment of this application;
FIG. 10 is an eighth schematic distribution diagram of a wavelength division multiplexing optical signal according to an embodiment of this application;
FIG. 11 is a ninth schematic distribution diagram of a wavelength division multiplexing optical signal according to an embodiment of this application;
FIG. 12 is a tenth schematic distribution diagram of a wavelength division multiplexing optical signal according to an embodiment of this application;
FIG. 13 is an eleventh schematic distribution diagram of a wavelength division multiplexing optical signal according to an embodiment of this application;
FIG. 14 is a twelfth schematic distribution diagram of a wavelength division multiplexing optical signal according to an embodiment of this application;
FIG. 15 is a thirteenth schematic distribution diagram of a wavelength division multiplexing optical signal according to an embodiment of this application;
FIG. 16 is a first schematic structural diagram of a transmit end according to an embodiment of this application;
FIG. 17 is a second schematic structural diagram of a transmit end according to an embodiment of this application;
FIG. 18 is a schematic structural diagram of a receive end according to an embodiment of this application; and
FIG. 19 is a schematic structural diagram of an optical communication system according to an embodiment of this application.

### DESCRIPTION OF EMBODIMENTS

This application provides an optical communication method, apparatus, and system. Optical signals with different polarizations are configured within a ZDF region, to reduce impact of a four-wave mixing effect. It should be understood that "first", "second", and the like used in this application are merely used for a purpose of distinguishing for description, and shall not be understood as an indication or implication of relative importance or an indication or implication of a sequence. In addition, for brevity and clarity, reference numerals and/or letters are repeated in a plurality of accompanying drawings of this application. Repetition does not indicate that there is a strict restrictive relationship between various embodiments and/or configurations.

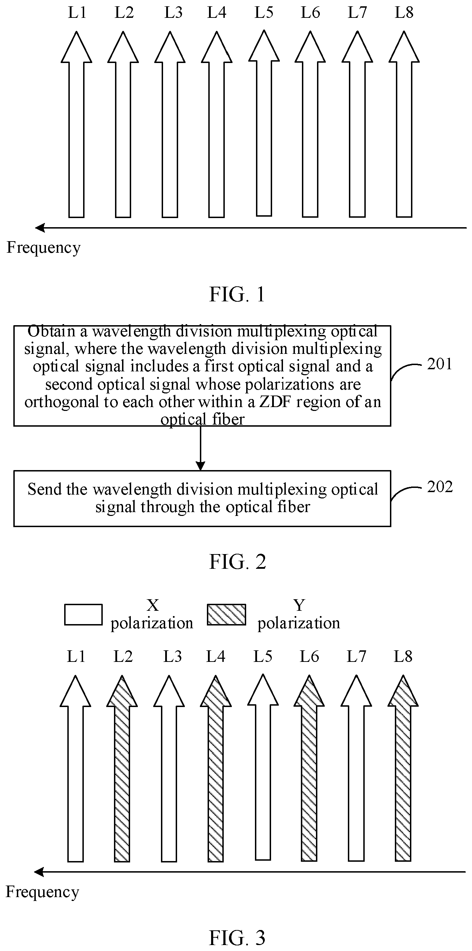

The optical communication method in this application may be applied to an optical communication system. In the optical communication system, an optical signal may be transmitted through an optical fiber. To reduce a dispersion penalty, a frequency of a wavelength division multiplexing optical signal may be configured near a ZDF of the optical fiber. However, the wavelength division multiplexing optical signal near the ZDF has a severe four-wave mixing effect. FIG. 1 is a schematic distribution diagram of a wavelength division multiplexing optical signal. In FIG. 1, a horizontal coordinate indicates frequencies, and a left arrow indicates that the frequencies gradually increase along a direction of the arrow. As shown in FIG. 1, the wavelength division multiplexing optical signal includes eight optical signals with different frequencies. The eight optical signals are respectively L1 to L8. In L1 to L8, frequency spacings between adjacent frequencies of the optical signals are the same. The wavelength division multiplexing optical signal is near a ZDF of an optical fiber. For example, a frequency range of the ZDF region of the optical fiber covers the frequencies of L6 to L8. In this case, in FIG. 1, a four-wave mixing effect exists among any four consecutive optical signals. For example, the any four consecutive optical signals are L1 to L4, L2 to L5, L3 to L6, or L5 to L8. The four-wave mixing effect degrades performance of the optical communication system.

Therefore, this application provides an optical communication method. The optical communication method may be applied to a transmit end. The transmit end is connected to a receive end through the optical fiber. The transmit end or the receive end may be a switch, a router, a server, or the like. The server may be a computing node in a data center. Alternatively, the transmit end or the receive end may be an optical module in a switch, a router, or a server. FIG. 2 is a schematic flowchart of an optical communication method according to an embodiment of this application. As shown in FIG. 2, the optical communication method includes the following steps.

Step 201: The transmit end obtains the wavelength division multiplexing optical signal. The wavelength division multiplexing optical signal includes a first optical signal and a second optical signal whose polarizations are orthogonal to each other within the ZDF region of the optical fiber.

The transmit end may receive the wavelength division multiplexing optical signal from another device. Alternatively, the transmit end may generate the wavelength division multiplexing optical signal based on an electrical signal. The wavelength division multiplexing optical signal includes N pairs of optical signals. N is an integer greater than 1. Each pair of optical signals includes the first optical signal and the second optical signal that are of different wavelengths and whose polarizations are orthogonal to each other. Each optical signal is a single-polarization optical signal. To be specific, each optical signal at one wavelength includes at most an optical signal with an X polarization or an optical signal with a Y polarization. The transmit end is connected to the receive end through the optical fiber. A frequency of at least one of N first optical signals and a frequency of at least one of N second optical signals are within the ZDF region of the optical fiber. The optical fiber has the ZDF or a ZDW. A zero-dispersion wavelength means that group velocity dispersion (or referred to as group delay dispersion or second-order dispersion per unit length) of the optical fiber at the frequency is 0. The group velocity dispersion is a phenomenon that a group velocity of light in a transparent medium is related to a frequency or wavelength of light. ZDF=C/ZDW. C is a speed of light. ZDFs of different optical fibers may be different due to a manufacturing process. The ZDF region may be a frequency range specified in a standard. For example, for a standard single-mode optical fiber (standard single-mode fiber, SSMF), a ZDF region is 230.609 THz to 226.429 THz. For an optical fiber manufactured by a manufacturer according to a standard, the ZDF is within the ZDF region. The ZDF region may also be referred to as a continuous first frequency region. A center of the first frequency region is the ZDF of the optical fiber. A frequency width of the first frequency region is less than a first threshold. For example, the first threshold is 4.5 THz.

It should be understood that during actual application, a wavelength and a frequency may be mutually converted. Therefore, the ZDF region has a corresponding ZDW region. For example, when the ZDF region is 230.609 THz to 226.429 THz, a ZDW region corresponding to the ZDF region is 1300 nm to 1324 nm. Therefore, in this application, a wavelength of at least one of the N first optical signals and a wavelength of at least one of the N second optical signals are within the ZDW region of the optical fiber. In this application, unless otherwise specified, the frequency of the optical signal is a center frequency of the optical signal. A wavelength of the optical signal is a center wavelength of the optical signal. A frequency spacing is a frequency spacing between two center frequencies.

In this application, N is an integer greater than 1. Therefore, N may be 2, 4, 6, 8, or the like. The following describes a wavelength division multiplexing optical signal in this application by using an example in which N is equal to 4. FIG. 3 is a first schematic distribution diagram of a wavelength division multiplexing optical signal according to an embodiment of this application. As shown in FIG. 3, the wavelength division multiplexing optical signal includes four pairs of optical signals with different frequencies. The four pairs of optical signals include eight optical signals. The eight optical signals are respectively L1 to L8. L1, L3, L5, and L7 are first optical signals with an X polarization. L2, L4, L6, and L8 are second optical signals with a Y polarization. The first optical signal and the second optical signal are alternately distributed. It is assumed that the ZDF region of the optical fiber covers frequencies of L3 to L8. In this case, the ZDF region includes three first optical signals with the X polarization and three second optical signals with the Y polarization.

Step 202: The transmit end sends the wavelength division multiplexing optical signal through the optical fiber. The transmit end is connected to the receive end through the optical fiber. The optical fiber may be a non-polarization maintaining optical fiber. The transmit end sends the wavelength division multiplexing optical signal to the receive end through the optical fiber. The receive end may transmit the wavelength division multiplexing optical signal to another device. Alternatively, the receive end may perform demultiplexing on the wavelength division multiplexing optical signal to obtain the N first optical signals and the N second optical signals. The receive end converts the N first optical signals and the N second optical signals into 2×N electrical signals. Each optical signal is in one-to-one correspondence with each electrical signal. The receive end may perform data processing on the 2×N electrical signals.

In FIG. 3, the ZDF region includes the first optical signal and the second optical signal whose polarizations are orthogonal to each other. A four-wave mixing effect is not produced between the first optical signal and the second optical signal. For example, in FIG. 1, the four-wave mixing effect is produced among L5 to L8. In FIG. 3, L5 and L7 are the first optical signals with the X polarization, and L6 and L8 are the second optical signals with the Y polarization. Therefore, the four-wave mixing effect is not produced among L5 to L8. Therefore, in this application, impact of the four-wave mixing effect can be reduced.

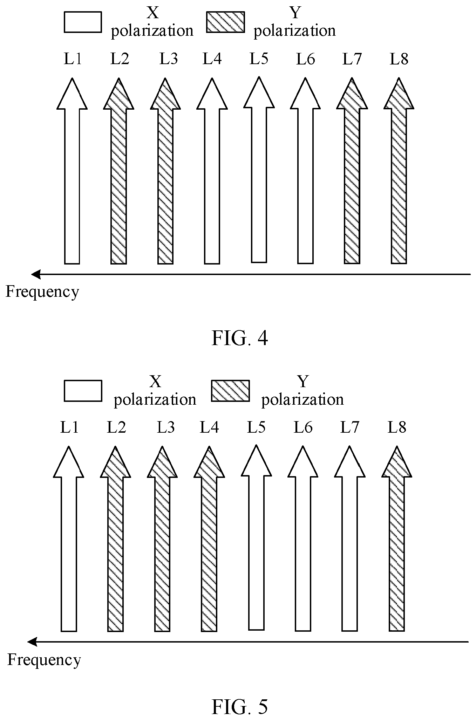

In FIG. 3, the first optical signal and the second optical signal are alternately distributed. Therefore, one optical signal with a different polarization is included between two adjacent optical signals with a same polarization. In this case, a four-wave mixing effect may still be produced among four optical signals with a same polarization. For example, the four-wave mixing effect may be produced among L1, L3, L5, and L7. Therefore, in this embodiment of this application, impact of the four-wave mixing effect may be further reduced by adjusting a frequency spacing. Adjusting the frequency spacing is to change a polarization distribution of the wavelength division multiplexing optical signal without changing a quantity of optical signals and frequencies of the optical signals. FIG. 4 is a second schematic distribution diagram of a wavelength division multiplexing optical signal according to an embodiment of this application. As shown in FIG. 4, based on FIG. 3, polarizations of L2, L3, L4, L6, and L7 are changed, so that at least two optical signals with different polarizations are included between two adjacent optical signals with a same polarization in the wavelength division multiplexing optical signal. Specifically, four first optical signals are respectively L1, L4, L5, and L6. Four second optical signals are respectively L2, L3, L7, and L8. Two second optical signals are included between L1 and L4. Three first optical signals are included between L3 and L7. A four-wave mixing effect may not be produced between L1, L4, L5 and L6 by adjusting the frequency spacing, thereby reducing impact of the four-wave mixing effect.

For example, a frequency spacing between adjacent frequencies in the wavelength division multiplexing optical signal is M GHz. In FIG. 3, a frequency spacing between adjacent first optical signals is 2×M GHz. A frequency spacing between adjacent second optical signals is 2×M GHz. In FIG. 4, a frequency spacing between L1 and L4 is 3×M GHz. A frequency spacing between L4 and L5 is M GHz. A frequency spacing between L3 and L7 is 4×M GHz.

In FIG. 4, it is assumed that center frequencies of the four second optical signals are respectively B1 to B4. The four second optical signals are sequentially sorted based on values of the frequencies. A center frequency of L2 is B1. A center frequency of L3 is B2. A center frequency of L7 is B3. A center frequency of L8 is B4. The four second optical signals have a symmetric central axis. In this case, B1+B4-B2-B3=B. B is equal to 0. For ease of description, the formula is referred to as a first condition. When B is equal to 0, and a value of (B2+B3)/2 is within the ZDF region, the four second optical signals may still produce the four-wave mixing effect. Therefore, in this embodiment of this application, the frequency spacing may be adjusted, so that B is not equal to 0. FIG. 5 is a third schematic distribution diagram of a wavelength division multiplexing optical signal according to an embodiment of this application. As shown in FIG. 5, based on FIG. 3, polarizations of L3 and L6 are changed. Four first optical signals are respectively L1, L5, L6, and L7. Four second optical signals are respectively L2, L3, L4, and L8. The four second optical signals are sequentially sorted based on values of frequencies. Center frequencies of the four second optical signals are respectively B1 to B4. In this case, B1+B4-B2-B3=B. B is not equal to 0. Similarly, in FIG. 5, when center frequencies of the four first optical signals are respectively B1 to B4, B is not equal to 0.

It can be learned from the foregoing descriptions that N is an integer greater than 3. Therefore, as N increases, the four optical signals in the WDM optical signal easily satisfy the foregoing first condition. However, during actual application, when B is equal to 0, and a difference between B1 and B4 is large, impact of the four-wave mixing effect produced among the four optical signals is low. Therefore, to reduce complexity of adjusting the frequency spacing, the difference between B1 and B4 may be limited to be less than 4.5 THz. When the difference between B1 and B4 is greater than or equal to 4.5 THz, the transmit end does not need to adjust the frequency spacing to enable the four optical sub-signals to fail in satisfying the first condition.

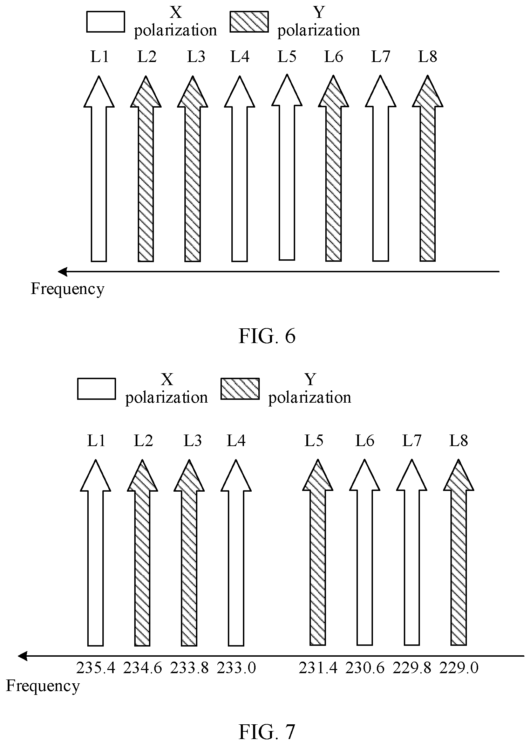

During actual application, a degenerate four-wave mixing effect may be produced among three optical signals with a same frequency spacing. The three optical signals are sequentially sorted based on frequencies. Center frequencies of the three optical signals are sequentially B5, B6, and B7. That the three optical signals have the same frequency spacing means that B8 is equal to 0. B5+B7-2×B6=B8. For example, in FIG. 5, frequency spacings of L2, L3, and L4 are the same. In this case, a degenerate four-wave mixing effect may be produced among L2, L3, and L4. Similarly, the degenerate four-wave mixing effect may be produced among L5, L6, and L7. Therefore, in this embodiment of this application, the frequency spacing may be further adjusted, so that the three optical signals with the same frequency spacing do not exist near the ZDF. FIG. 6 is a fourth schematic distribution diagram of a wavelength division multiplexing optical signal according to an embodiment of this application. As shown in FIG. 6, based on FIG. 3, polarizations of L3 and L4 are changed. Four first optical signals are respectively L1, L4, L5, and L7. Four second optical signals are respectively L2, L3, L6, and L8. Three optical signals with a same frequency spacing do not exist in the four second optical signals. Specifically, a frequency spacing between L2 and L3 is M GHz. A frequency spacing between L3 and L6 is 3×M GHz. A frequency spacing between L6 and L8 is 2×M GHz. Similarly, three optical signals with a same frequency spacing do not exist in the four first optical signals. A frequency spacing between L1 and L4 is 3×M GHz. A frequency spacing between L4 and L5 is M GHz. A frequency spacing between L5 and L7 is 2×M GHz.

It can be learned from the foregoing descriptions that N is an integer greater than 3. Therefore, as N increases, three optical signals with a same frequency spacing are likely to exist in the WDM optical signal. However, during actual application, when frequencies of the three optical signals are far away from the ZDF region, impact of a four-wave mixing effect produced among the three optical signals is low. Therefore, to reduce complexity of adjusting the frequency spacing, only frequency spacings of three optical signals near the ZDF region may be adjusted. For the three optical signals, frequencies of at least two of the optical signals are within the ZDF region.

The optical communication method in this application may be applied to a fronthaul communication system, a data center communication system, a metropolitan area network communication system, or the like. The fronthaul communication system may be a local area network wavelength division multiplexing (local area network WDM, LAN WDM) system or another possible wavelength division multiplexing system. The following describes a wavelength division multiplexing optical signal in this application by using the LAN WDM system as an example. The LAN WDM system may use eight wavebands in a range of 1273 nm to 1309 nm of an O waveband.

**Table 1 8-waveband distribution of a LAN WDM system**

| No. | Center frequency (THz) | Center wavelength (nm) | Wavelength Range (nm) |
|---|---|---|---|
| L1 | 235.4 | 1273.54 | 1272.55~1274.54 |
| L2 | 234.6 | 1277.89 | 1276.89~1278.89 |
| L3 | 233.8 | 1282.26 | 1281.25~1283.27 |
| L4 | 233.0 | 1286.66 | 1285.65~1287.68 |
| L5 | 231.4 | 1295.56 | 1294.53~1296.59 |
| L6 | 230.6 | 1300.05 | 1299.02~1301.09 |
| L7 | 229.8 | 1304.58 | 1303.54~1305.63 |
| L8 | 229.0 | 1309.14 | 1308.09~1310.19 |

For center frequencies, center wavelengths, and wavelength ranges of the eight wavebands of the LAN WDM system, refer to Table 1. In Table 1, the wavelength division multiplexing optical signal includes eight optical signals L1 to L8 with different frequencies. A frequency spacing between adjacent frequencies of L1 to L4 is 800 GHz. A frequency spacing between adjacent frequencies of L5 to L8 is 800 GHz. A frequency spacing between L4 and L5 is 1600 GHz.

Based on the waveband distribution shown in Table 1, wavelength division multiplexing optical signals with different polarization distributions may be obtained. FIG. 7 is a fifth schematic distribution diagram of a wavelength division multiplexing optical signal according to an embodiment of this application. As shown in FIG. 7, the wavelength division multiplexing optical signal includes eight optical signals with different frequencies. The eight optical signals are respectively L1 to L8. Center frequencies of L1 to L8 correspond to the eight center frequencies described in Table 1. L1, L4, L6, and L7 are first optical signals with an X polarization. L2, L3, L5, and L8 are second optical signals with a Y polarization. In a specific instance, a polarization arrangement of the eight optical signals is XYYXYXXY.

It is assumed that a frequency range of the ZDF region of the optical fiber is 230.609 THz to 226.429 THz. In this case, the ZDF region covers frequencies of L6, L7, and L8. In this case, the ZDF region includes two first optical signals with the X polarization and one second optical signal with the Y polarization. In FIG. 6, four optical signals that satisfy the first condition and three optical signals with a same frequency spacing do not exist near the ZDF.

It should be understood that FIG. 7 is merely an example of the wavelength division multiplexing optical signal provided in this embodiment of this application. For example, during actual application, based on FIG. 7, polarizations of all optical signals in the wavelength division multiplexing optical signal may alternatively be changed, so that L1, L4, L6, and L7 are the first optical signals of the Y polarization, and L2, L3, L5, and L8 are the second optical signals with the X polarization. In this case, a polarization arrangement of the eight optical signals may be described as YXXYXYYX. During actual application, a frequency spacing between L4 and L5 may be 800 GHz or 1600 GHz. For another example, a polarization arrangement of the eight optical signals may alternatively be XYYXXYYX or YXXYYXXY. If a transmission rate of each of the eight optical signals in the wavelength division multiplexing optical signal is 200 Gb/s (for example, PAM-4 modulation with a 100 G baud rate is used), a total transmission rate of the eight optical signals is 1.6 Tb/s. If a transmission rate of each of the eight optical signals in the wavelength division multiplexing optical signal is 100 Gb/s, a total transmission rate of the eight optical signals is 800 Gb/s.

During actual application, a polarization distribution of the wavelength division multiplexing optical signal may be the same as a polarization distribution of the wavelength division multiplexing optical signal in FIG. 3 to FIG. 6. For example, in the wavelength division multiplexing optical signal, four first optical signals are respectively L1, L4, L5, and L7. Four second optical signals are respectively L2, L3, L6, and L8. Center frequencies of L1 to L8 correspond to the eight center frequencies described in Table 1.

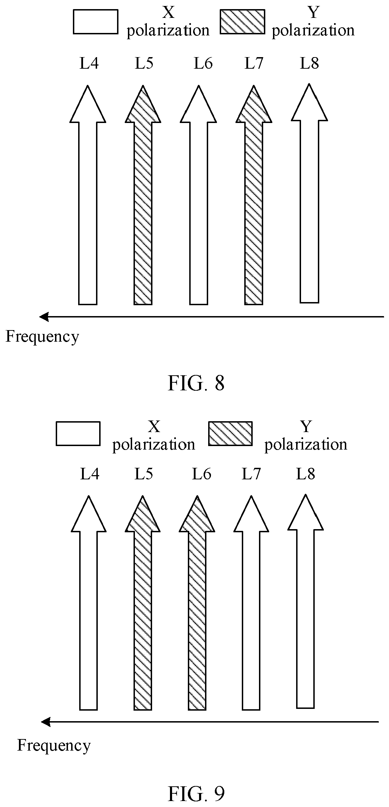

It can be learned from the foregoing descriptions that at least three optical signals are required to produce a four-wave mixing effect. Therefore, after impact of the four-wave mixing effect is reduced in an orthogonal polarization manner, at least five optical signals are required to produce the four-wave mixing effect. FIG. 8 is a sixth schematic distribution diagram of a wavelength division multiplexing optical signal according to an embodiment of this application. As shown in FIG. 8, the wavelength division multiplexing optical signal includes five optical signals with different frequencies. The five optical signals are respectively L4 to L8. L4, L6, and L8 are first optical signals with an X polarization. L5 and L7 are second optical signals with a Y polarization. In this case, frequency spacings of L4, L6, and L8 are the same. A degenerate four-wave mixing effect may be produced among L4, L6, and L8. The frequency spacing is adjusted, so that three optical signals with a same frequency spacing do not exist in optical signals with a same polarization. FIG. 9 is a seventh schematic distribution diagram of a wavelength division multiplexing optical signal according to an embodiment of this application. As shown in FIG. 9, based on FIG. 8, polarizations of L6 and L7 are changed. In this case, L4, L7, and L8 are first optical signals with an X polarization. L5 and L6 are second optical signals with a Y polarization. Frequency spacings between adjacent frequencies of L4, L7, and L8 are different. A frequency spacing between L4 and L7 is 2×M GHz. A frequency spacing between L7 and L8 is M GHz. Therefore, impact of a four-wave mixing effect is reduced by adjusting the frequency spacing.

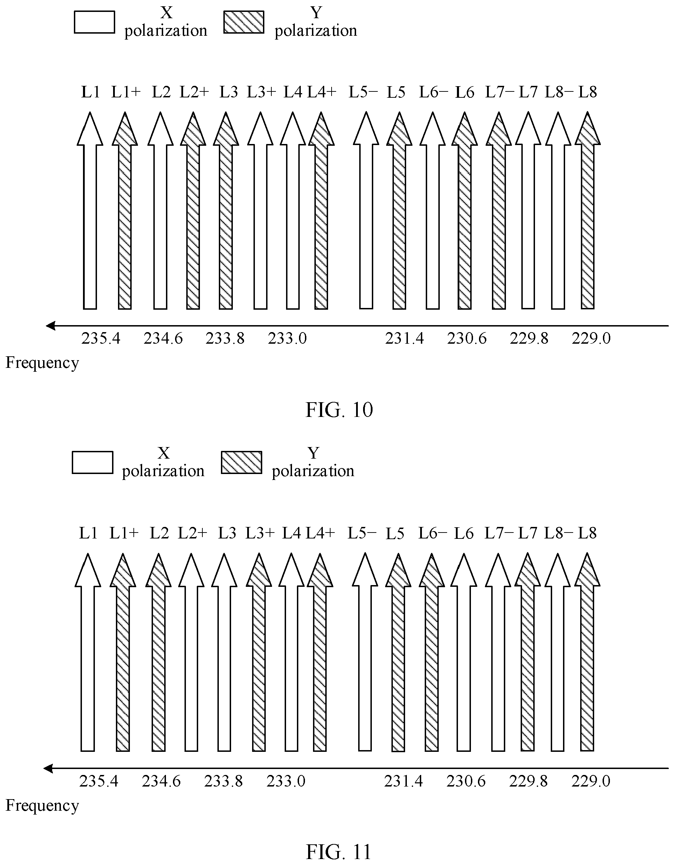

It can be learned from the foregoing descriptions that N is an integer greater than 3. During actual application, N may be a product of 2 and Z. Z is an integer greater than 0. For example, N may be 2, 4, 6, or 8. In FIG. 3 to FIG. 7, N is 4. An example in which N is 8 is used below to describe the wavelength division multiplexing optical signal provided in this embodiment of this application. FIG. 10 is an eighth schematic distribution diagram of a wavelength division multiplexing optical signal according to an embodiment of this application. As shown in FIG. 10, the wavelength division multiplexing optical signal includes 16 optical signals with different frequencies. The 16 optical signals are respectively L1 to L8, L1+ to L4+, and L5- to L8-. For center frequencies of L1 to L8, refer to the eight center frequencies described in Table 1. A frequency of L1+ is between a frequency of L1 and a frequency of L3. A frequency of L2+ is between a frequency of L2 and a frequency of L3. Similarly, a frequency of L5- is between a frequency of L4 and a frequency of L5. A frequency of L6- is between a frequency of L5 and a frequency of L6. The 16 optical signals include eight first optical signals with an X polarization and eight second optical signals with a Y polarization. The eight first optical signals are respectively L1, L2, L3+, L4, L5-, L6-, L7, and L8-. The eight second optical signals are respectively L1+, L2+, L3, L4+, L5, L6, L7-, and L8.

It is assumed that a frequency range of the ZDF region of the optical fiber is 230.609 THz to 226.429 THz. In this case, the frequency range of the ZDF region covers frequencies of L6, L7-, L7, L8-, and L8. In FIG. 10, four optical signals that meet the first condition and whose value of (B2+B3)/2 is within the ZDF region do not exist. However, frequency spacings between adjacent frequencies of L8, L7-, and L5 are the same. Frequencies of L8 and L7- are within the ZDF region. A degenerate four-wave mixing effect may be produced among L8, L7-, and L5. Therefore, the frequency spacing may be adjusted, so that three optical signals with a same frequency spacing do not exist near the ZDF. FIG. 11 is a ninth schematic distribution diagram of a wavelength division multiplexing optical signal according to an embodiment of this application. As shown in FIG. 11, based on FIG. 10, polarizations of L2, L2+, L3, L3+, L6-, L6, L7-, and L7 are changed. In this case, three optical signals with a same frequency spacing do not exist near the ZDF region.

In FIG. 10 and FIG. 11, a polarization distribution of L1 to L4+ is the same as a polarization distribution of L5- to L8. Specifically, in FIG. 10, the polarization distribution of L1 to L4+ is 10100110. The polarization distribution of L5 to L8 is 10100110. 1 represents an X polarization. 0 represents a Y polarization. In FIG. 11, the polarization distribution of L1 to L4+ is 10011010. The polarization distribution of L5- to L8 is 10011010. Complexity of adjusting the frequency spacing may be reduced by using the same polarization distribution.

In FIG. 11, the polarization distribution of L1 to L4+ is the same as a polarization distribution in FIG. 6. Therefore, for descriptions of the wavelength division multiplexing optical signal whose N is equal to 16, refer to the related descriptions in FIG. 3 to FIG. 7. For example, in FIG. 7, a polarization distribution of the wavelength division multiplexing optical signal is 10010110. When N is equal to 16, in a possible example, the polarization distribution of the wavelength division multiplexing optical signal is 1001011010010110. Similarly, when N is equal to 32, refer to the related descriptions in FIG. 3 to FIG. 7.

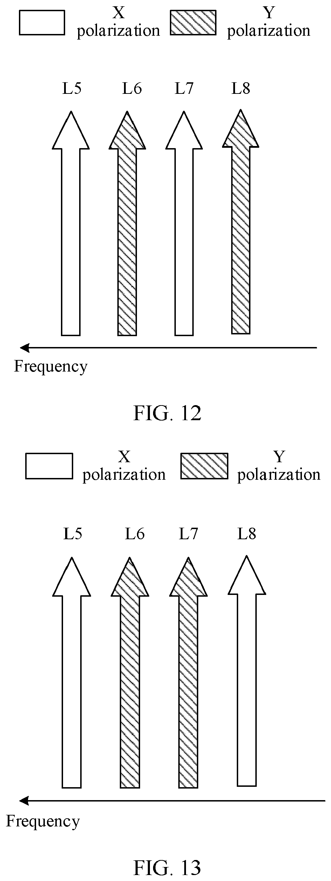

An example in which N is 2 is used below to describe the wavelength division multiplexing optical signal provided in this embodiment of this application. FIG. 12 is a tenth schematic distribution diagram of a wavelength division multiplexing optical signal according to an embodiment of this application. As shown in FIG. 12, the wavelength division multiplexing optical signal includes two pairs of optical signals with different frequencies. The two pairs of optical signals include L5 to L8. For center frequencies, center wavelengths, and wavelength ranges of L5 to L8, refer to L5 to L8 in Table 1. The two pairs of optical signals include two first optical signals with an X polarization and two second optical signals with a Y polarization. The two first optical signals are respectively L5 and L7. The two second optical signals are respectively L6 and L8.

It should be understood that, in FIG. 12, each pair of optical signals includes one first optical signal with the X polarization and one second optical signal with the Y polarization. During actual application, polarization states of different pairs of optical signals may be different. For example, the wavelength division multiplexing optical signal includes two pairs of optical signals. The two pairs of optical signals include a first pair of optical signals and a second pair of optical signals. The first pair of optical signals includes a first optical signal with the X polarization and a second optical signal with the Y polarization. The second pair of optical signals includes a third optical signal with X' polarization and a fourth optical signal with Y' polarization. The X polarization is orthogonal to the Y polarization. The X' polarization is orthogonal to the Y' polarization. The X polarization is different from the X' polarization. The Y polarization is different from the Y' polarization.

It can be learned from the foregoing descriptions that, in this embodiment of this application, a frequency spacing between optical signals with a same polarization may be adjusted. In the invention, a polarization arrangement of four adjacent and equal-spaced optical signals in the wavelength division multiplexing optical signal may be XYYX or YXXY, and a four-wave mixing effect of the four adjacent and equal-spaced optical signals in the wavelength division multiplexing optical signal is low in a random birefringent optical fiber model. FIG. 13 is an eleventh schematic distribution diagram of a wavelength division multiplexing optical signal according to an embodiment of this application. As shown in FIG. 13, based on FIG. 12, polarizations of L7 and L8 are changed. In this case, L5 and L8 are with an X polarization. L6 and L7 are with a Y polarization. If a transmission rate of each of the four optical signals in the wavelength division multiplexing optical signal is 100 Gb/s, a total transmission rate of L11. The six second optical signals are respectively L2, L4, L6, L8, L10, and L12.

**Table 2 12-waveband distribution of a LAN WDM system**

| No. | Center frequency (THz) | Center wavelength (nm) | Wavelength range (nm) |
|---|---|---|---|
| L1 | 236.2 | 1269.23 | 1268.24~1270.22 |
| L2 | 235.4 | 1273.54 | 1272.55~1274.54 |
| L3 | 234.6 | 1277.89 | 1276.89~1278.89 |
| L4 | 233.8 | 1282.26 | 1281.25~1283.27 |
| L5 | 233.0 | 1286.66 | 1285.65~1287.68 |
| L6 | 232.2 | 1291.10 | 1290.07~1292.12 |
| L7 | 231.4 | 1295.56 | 1294.53~1296.59 |
| L8 | 230.6 | 1300.05 | 1299.02~1301.09 |
| L9 | 229.8 | 1304.58 | 1303.54~1305.63 |
| L10 | 229.0 | 1309.14 | 1308.09~1310.19 |
| L11 | 228.2 | 1313.73 | 1312.67~1314.79 |
| L12 | 227.4 | 1318.35 | 1317.28~1319.42 |

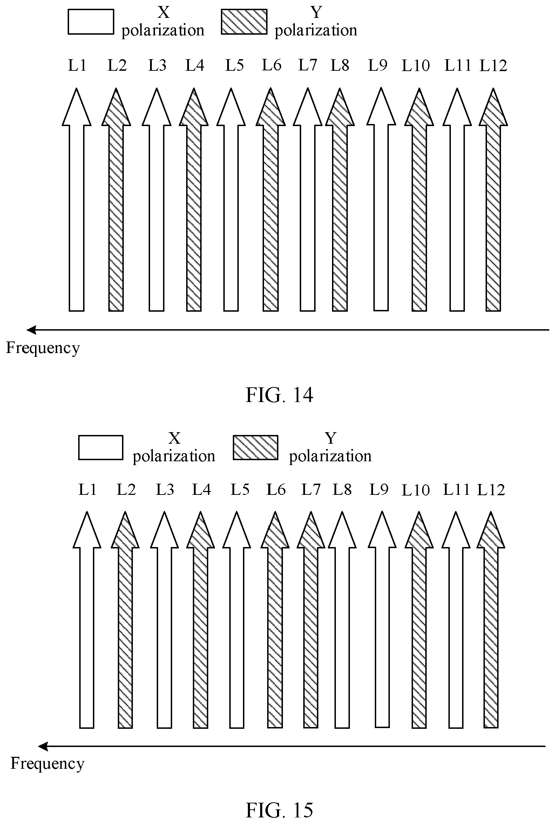

It can be learned from the foregoing descriptions that, in this embodiment of this application, a frequency spacing between optical signals with a same polarization may be adjusted. FIG. 15 is a thirteenth schematic distribution diagram of a wavelength division multiplexing optical signal according to an embodiment of this application. As shown in FIG. 15, based on FIG. 14, polarizations of L7 and L8 are changed. In this case, six first optical signals are respectively L1, L3, L5, L8, L9, and L11. Six second optical signals are respectively L2, L4, L6, L7, L10, and L12.

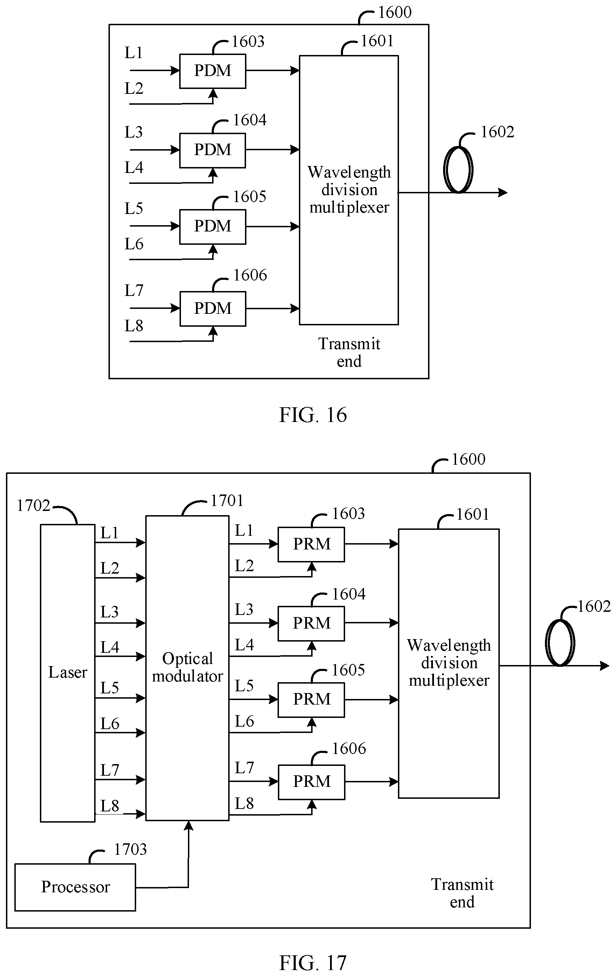

The foregoing describes the optical communication method provided in embodiments of this application. The following describes an optical communication apparatus provided in an embodiment of this application. The optical communication apparatus is also referred to as a transmit end. FIG. 16 is a first schematic structural diagram of a transmit end according to an embodiment of this application. As shown in FIG. 16, a transmit end 1600 includes N PDMs 1603 to 1606 and a wavelength division multiplexer 1601. N is an integer greater than 1. In FIG. 16, an example in which N is equal to 4 is used for description. The N PDMs 1603 to 1606 are configured to perform beam combination on N pairs of optical signals, to obtain N beam-combined optical signals. The N pairs of optical signals are in one-to-one correspondence with the N PDMs 1603 to 1606. The N pairs of optical signals respectively include a first pair of optical signals, a second pair of optical signals, a third pair of optical signals, and a fourth pair of optical signals. The first pair of optical signals corresponds to the PDM 1603. The first pair of optical signals includes L1 and L2. The second pair of optical signals includes L3 and L4. The third pair of optical signals includes L5 and L6. The fourth pair of optical signals includes L7 and L8. Each of the N beam-combined optical signals includes a first optical signal and a second optical signal that are of different wavelengths and whose polarizations are orthogonal to each other. The first optical signal is with an X polarization, and the second optical signal is with a Y polarization. The X polarization is orthogonal to the Y polarization.

The PDM may be a polarization beam combiner (polarization beam combiner, PBC) or a polarization rotation beam combining device. When the PDM is the polarization rotation beam combining device, L1 to L8 are all with the X polarization or the Y polarization. The polarization rotation beam combining device is configured to perform polarization rotation beam combination on optical signals with a same polarization, to obtain a beam-combined optical signal. The beam-combined optical signal includes a first optical signal with the X polarization and a second optical signal with the Y polarization. When the PDM is the PBC, each PBC receives a first optical signal with the X polarization and a second optical signal with the Y polarization. The PBC is configured to perform polarization beam combination on two optical signals with different polarizations, to obtain a beam-combined optical signal.

The wavelength division multiplexer 1601 is configured to perform beam combination on the N beam-combined optical signals, to obtain a wavelength division multiplexing optical signal. A frequency of at least one of N first optical signals and a frequency of at least one of N second optical signals are within a ZDF region of an optical fiber. For descriptions of the wavelength division multiplexing optical signal, refer to the foregoing descriptions of the wavelength division multiplexing optical signal in FIG. 2 to FIG. 15. The transmit end 1600 is connected to a receive end through an optical fiber 1602. The wavelength division multiplexer 1601 is configured to transmit the wavelength division multiplexing optical signal to the receive end through the optical fiber 1602. The transmit end 1600 may generate N pairs of optical signals based on an electrical signal. FIG. 17 is a second schematic structural diagram of a transmit end according to an embodiment of this application. As shown in FIG. 17, based on FIG. 16, the transmit end 1600 further includes an optical modulator 1701, a laser 1702, and a processor 1703.

The processor 1703 is configured to transmit an electrical signal to the optical modulator 1701. The processor 1703 may be a central processing unit (central processing unit, CPU), a network processor (network processor, NP), or a combination of a CPU and an NP. The processor 1703 may also be a graphic processing unit (graphic processing unit, GPU). The processor 1703 may further include a hardware chip or another general-purpose processor. The foregoing hardware chip may be an application-specific integrated circuit (application-specific integrated circuit, ASIC), a programmable logic device (programmable logic device, PLD), or a combination thereof.

The laser 1702 is configured to generate 2×N laser lights with different wavelengths. The following uses an example in which N is equal to 4 for description. For example, the laser 1702 includes eight sub-lasers. Each sub-laser is configured to generate a laser light with one wavelength. The optical modulator 1701 is configured to modulate eight laser light based on the electrical signal, to obtain eight optical signals L1 to L8. The optical modulator 1701 may obtain L1 to L8 through intensity modulation or phase modulation. The optical modulator 1701 is further configured to transmit L1 to L8 to the polarization rotation beam combining devices 1603 to 1606. Each polarization rotation beam combining device is configured to perform polarization rotation beam combination on two optical signals, and output a beam-combined optical signal. The wavelength division multiplexer 1601 is configured to perform beam combination on N beam-combined optical signals, to obtain a wavelength division multiplexing optical signal. The wavelength division multiplexer 1601 is further configured to transmit the wavelength division multiplexing optical signal to the receive end through the optical fiber 1602.

In another embodiment, the transmit end 1600 may further include a memory. The memory may be configured to store an electrical signal. The processor 1703 may be configured to obtain the electrical signal from the memory. The memory may be a non-volatile memory, such as a hard disk drive (hard disk drive, HDD), or may be a volatile memory (volatile memory), such as a random-access memory (random-access memory, RAM). The memory is any other medium that can carry or store expected program code in a form of an instruction or a data structure and that can be accessed by a computer, but is not limited thereto.

During actual application, one device may include both the transmit end 1600 and the receive end. Another device may include both the receive end and the transmit end. The transmit end 1600 of the one device is configured to send a wavelength division multiplexing optical signal to the receive end of another device. The transmit end of another device may also be configured to send a wavelength division multiplexing optical signal to the receive end of the one device. In this case, the receive end of the one device may receive the wavelength division multiplexing optical signal from another device through the optical fiber 1602. For descriptions of the wavelength division multiplexing optical signal, refer to the foregoing descriptions of the wavelength division multiplexing optical signal in FIG. 2 to FIG. 15. In this case, the receive end may process the wavelength division multiplexing optical signal in any one of the following manners. For example, the receive end transmits the wavelength division multiplexing optical signal to another device. For another example, the receive end converts the wavelength division multiplexing optical signal into an electrical signal, and performs data processing on the electrical signal.

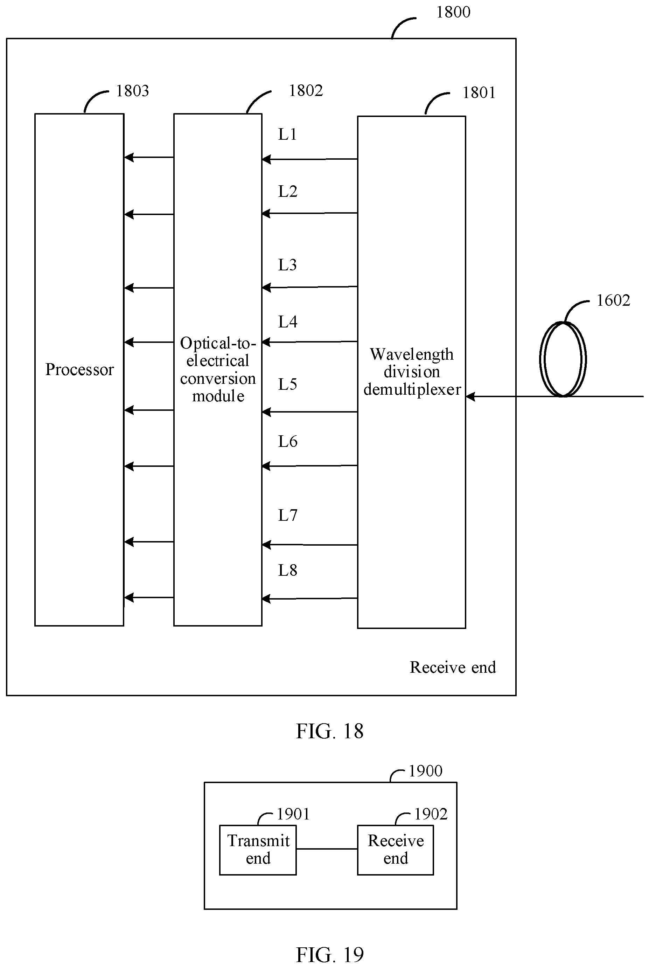

The following uses an example in which the receive end converts the wavelength division multiplexing optical signal into the electrical signal for description. FIG. 18 is a schematic structural diagram of a receive end according to an embodiment of this application. As shown in FIG. 18, the receive end 1800 includes a wavelength division demultiplexer 1801, an optical-to-electrical conversion module 1802, and a processor 1803. The wavelength division demultiplexer 1801 is configured to receive a wavelength division multiplexing optical signal from a transmit end of another device through the optical fiber 1602. The wavelength division demultiplexer 1801 is configured to perform wavelength division demultiplexing on the wavelength division multiplexing optical signal to obtain eight optical signals L1 to L8. The optical-to-electrical conversion module 1802 is configured to demodulate L1 to L8 to obtain eight electrical signals. The processor 1803 is configured to perform data processing on the electrical signal. For descriptions of the processor 1803, refer to the foregoing descriptions of the processor 1703 in FIG. 17.

It should be understood that FIG. 16 to FIG. 18 are merely several examples of the transmit end or the receive end provided in embodiments of this application. During actual application, a person skilled in the art may adaptively change the foregoing examples as required. The adaptive change includes but is not limited to any one of the following content.

First, frequency spacings of one or more pairs of optical signals of the N pairs of optical signals are modified. For example, in FIG. 16, frequencies of each pair of optical signals are adjacent. Frequencies of L1 and L2 of the first pair of optical signals are adjacent. Frequencies of L3 and L4 of the second pair of optical signals are adjacent. During actual application, the first pair of optical signals may include L1 and L4. The second pair of optical signals may include L2 and L3. In this case, frequencies of L1 and L4 of the first pair of optical signals are not adjacent.

Second, the transmit end 1600 further includes a polarization rotator. For example, in FIG. 17, the PDM is the polarization rotation beam combining device. The polarization rotation beam combining devices 1603 to 1606 receive optical signals with an X polarization or a Y polarization. During actual application, the PDM may be the PBC. The transmit end 1600 further includes the polarization rotator. The polarization rotator is configured to perform polarization rotation on L2, L4, L6, and L8 output by the optical modulator 1701, to obtain L2, L4, L6, and L8 with the Y polarization. Each PBC is configured to perform polarization beam combination on a first optical signal with the X polarization and a second optical signal with the Y polarization, to obtain a beam-combined optical signal.

Third, the transmit end 1600 generates laser lights by using a laser. For example, in FIG. 17, the transmit end 1600 may generate laser lights of L1 to L8 by using eight sub-lasers. During actual application, the transmit end 1600 may include only one laser. The one laser is configured to generate laser lights with a plurality of frequencies. The laser lights with the plurality of frequencies includes L1 to L8.

Fourth, the transmit end 1600 first performs multiplexing, and then performs polarization beam combination. For example, in FIG. 17, the transmit end 1600 first performs polarization beam combination by using the polarization rotation beam combining device, and then performs multiplexing by using the wavelength division multiplexer 1601. During actual application, the transmit end 1600 may include two wavelength division multiplexers and a PBC. One wavelength division multiplexer is configured to perform beam combination on four optical signals with an X polarization to obtain a beam-combined optical signal with the X polarization. The other wavelength division multiplexer is configured to perform beam combination on four optical signals with the Y polarization to obtain a beam-combined optical signal on Y polarization. The PBC is configured to perform polarization beam combination on the beam-combined optical signal with the Y polarization and the beam-combined optical signal with the X polarization, to obtain a wavelength division multiplexing optical signal.

Fifth, the transmit end 1600 directly performs multiplexing on N optical signals with the X polarization and N optical signals with the Y polarization by using one wavelength division multiplexer, and ensures a polarization arrangement of the N pairs of optical signals. In this case, the transmit end 1600 may not need to include N PDMs. For the polarization arrangement of the N pairs of optical signals, refer to the descriptions in any one of the foregoing examples.

During actual application, the PDMs 1603 to 1606 may be connected to the wavelength division multiplexer 1601 through an optical fiber. The optical fiber may be a non-polarization maintaining optical fiber. When the transmit end 1600 first performs multiplexing and then performs polarization beam combination, the wavelength division multiplexer is connected to the PBC through a polarization maintaining optical fiber. Therefore, in this embodiment of this application, costs of the transmit end 1600 may be reduced.

The PDMs 1603 to 1606 and the optical modulator 1701 may be implemented on a same integrated optical chip. A material of the PDMs 1603 to 1606 or the optical modulator 1701 may be indium phosphide InP, silicon-on-insulator (silicon-on-insulator, SoI), or lithium niobate on insulator LNoI. A material of the wavelength division multiplexer 1601 may be thick silicon or a planar lightwave circuit (planar lightwave circuit, PLC). The wavelength division multiplexer 1601 may be implemented on an optical chip having a polarization maintaining feature or a polarization-insensitive feature. The two optical chips may be directly coupled or connected through an optical fiber. The optical fiber may be a non-polarization maintaining optical fiber. In this embodiment, a size of the transmit end 1600 may be reduced, and assembly complexity of the transmit end 1600 is simplified and costs of the transmit end 1600 are reduced.

The following describes an optical communication system provided in an embodiment of this application. FIG. 19 is a schematic structural diagram of an optical communication system according to an embodiment of this application. As shown in FIG. 19, the optical communication system 1900 includes a transmit end 1901 and a receive end 1902. The transmit end 1901 is connected to the receive end 1902 through an optical fiber. The transmit end 1901 is configured to transmit a wavelength division multiplexing optical signal to the receive end 1902 through the optical fiber. The wavelength division multiplexing optical signal includes N pairs of optical signals. Each pair of optical signals includes a first optical signal and a second optical signal that are of different wavelengths and whose polarizations are orthogonal to each other. N is an integer greater than 1. A frequency of at least one of N first optical signals and a frequency of at least one of N second optical signals are within a zero-dispersion frequency ZDF region of the optical fiber. The receive end 1902 is configured to receive the wavelength division multiplexing optical signal. For descriptions of the transmit end 1901, refer to the foregoing descriptions of the transmit end 1600 in FIG. 16 or FIG. 17. For descriptions of the receive end 1902, refer to the foregoing descriptions of the receive end 1800 in FIG. 18. For descriptions of the wavelength division multiplexing optical signal, refer to the foregoing descriptions of the wavelength division multiplexing optical signal in FIG. 2 to FIG. 15.

In another embodiment, the optical communication system may further include a first device and a second device. The first device is configured to transmit 2×N electrical signals to the transmit end 1901. The transmit end 1901 is further configured to convert the 2×N electrical signals into N first optical signals and N second optical signals. Each optical signal is in one-to-one correspondence with each electrical signal. The transmit end 1901 is further configured to obtain the wavelength division multiplexing optical signal based on the N second optical signals and the N first optical signals. The receive end 1902 is further configured to split the wavelength division multiplexing optical signal into the N first optical signals and the N second optical signals, and convert the N first optical signals and the N second optical signals into 2×N electrical signals. The receive end 1902 is further configured to transmit the 2×N electrical signals to the second device.

## Claims

1. An optical communication method, comprising:
transmitting a wavelength division multiplexing optical signal through an optical fiber (1602), wherein the wavelength division multiplexing optical signal comprises four optical signals (L7-, L7, L8-, L8) with different frequencies, the frequencies of the four optical signals (L7-, L7, L8-, L8) are within a zero-dispersion frequency, ZDF, region of the optical fiber (1602), the ZDF region is 230.609 THz to 226.429 THz, a polarization arrangement of the four optical signals (L7-, L7, L8-, L8) is XYYX or YXXY based on a frequency order, and a spacing between any two adjacent optical signals of the four optical signals (L7-, L7, L8-, L8) is the same.

2. The method according to claim 1, wherein frequencies of each of the four optical signals (L7-, L7, L8-, L8) are adjacent.

3. The method according to claim 1 or 2, wherein a total transmission rate of the four optical signals (L7-, L7, L8-, L8) is 400 or 800 gigabits per second Gb/s.

4. The method according to any one of claims 1 to 3, wherein two frequencies of the four optical signals (L7-, L7, L8-, L8) are respectively 229.8 THz (L7) and 229 THz (L8).

5. The method according to any one of claims 1 to 4, wherein the optical fiber (1602) is a standard single-mode fiber, SSMF.

6. An optical communication system (1900), comprising a transmit end (1901) and a receive end (1902), wherein the transmit end (1901) is connected to the receive end (1902) through an optical fiber (1602); and
the transmit end (1901) is configured to perform the method according to any one of claims 1 to 5, and the receive end (1902) is configured to receive the wavelength division multiplexing optical signal.

7. An optical communication device (1600; 1901) configured to perform the method according to any one of claims 1 to 5.

## Patentansprüche

1. Optisches Kommunikationsverfahren, das Folgendes umfasst:
Übertragen eines optischen Wellenlängenmultiplexsignals durch eine optische Faser (1602), wobei das optische Wellenlängenmultiplexsignal vier optische Signale (L7-, L7, L8-, L8) mit unterschiedlichen Frequenzen umfasst, die Frequenzen der vier optischen Signale (L7-, L7, L8-, L8) innerhalb eines Nulldispersionsfrequenz- bzw. ZDF-Bereichs der optischen Faser (1602) liegen, der ZDF-Bereich von 230,609 THz bis 226,429 THz reicht, eine Polarisationsanordnung der vier optischen Signale (L7-, L7, L8-, L8) XYYX oder YXXY basierend auf einer Frequenzordnung ist und ein Abstand zwischen beliebigen zwei benachbarten optischen Signalen der vier optischen Signale (L7-, L7, L8-, L8) gleich ist.

2. Verfahren nach Anspruch 1, wobei Frequenzen jedes der vier optischen Signale (L7-, L7, L8-, L8) benachbart sind.

3. Verfahren nach Anspruch 1 oder 2, wobei eine Gesamtübertragungsrate der vier optischen Signale (L7-, L7, L8-, L8) 400 oder 800 Gigabit pro Sekunde Gb/s beträgt.

4. Verfahren nach einem der Ansprüche 1 bis 3, wobei zwei Frequenzen der vier optischen Signale (L7-, L7, L8-, L8) 229,8 THz (L7) bzw. 229 THz (L8) betragen.

5. Verfahren nach einem der Ansprüche 1 bis 4, wobei die optische Faser (1602) eine Standard-Einmodenfaser, SSMF, ist.

6. Optisches Kommunikationssystem (1900), das ein Sendeende (1901) und ein Empfangsende (1902) umfasst, wobei das Sendeende (1901) über eine optische Faser (1602) mit dem Empfangsende (1902) verbunden ist; und
das Sendeende (1901) dazu ausgelegt ist, das Verfahren nach einem der Ansprüche 1 bis 5 durchzuführen, und das Empfangsende (1902) dazu ausgelegt ist, das optische Wellenlängenmultiplexsignal zu empfangen.

7. Optische Kommunikationsvorrichtung (1600, 1901), die dazu ausgelegt ist, das Verfahren nach einem der Ansprüche 1 bis 5 durchzuführen.

## Revendications

1. Procédé de communication optique comprenant l'étape suivante :
transmettre un signal optique de multiplexage par répartition en longueur d'onde par l'intermédiaire d'une fibre optique (1602), le signal optique de multiplexage par répartition en longueur d'onde comprenant quatre signaux optiques (L7-, L7, L8-, L8) ayant des fréquences différentes, les fréquences des quatre signaux optiques (L7-, L7, L8-, L8) se situant dans une zone de plage de fréquences à dispersion nulle, ZDF, de la fibre optique (1602), la zone ZDF s'étendant de 230,609 THz à 226,429 THz, un agencement de polarisation des quatre signaux optiques (L7-, L7, L8-, L8) étant XYYX ou YXXY sur la base d'un ordre des fréquences, et les espacements entre deux signaux optiques adjacents quelconques parmi les quatre signaux optiques (L7-, L7, L8-, L8) sont identiques.

2. Procédé selon la revendication 1, dans lequel les fréquences de chacun des quatre signaux optiques (L7-, L7, L8-, L8) sont adjacentes.

3. Procédé selon la revendication 1 ou la revendication 2, dans lequel un débit de transmission total des quatre signaux optiques (L7-, L7, L8-, L8) est de 400 ou 800 gigabits par seconde, Gb/s.

4. Procédé selon l'une quelconque des revendications 1 à 3, dans lequel deux fréquences des quatre signaux optiques (L7-, L7, L8-, L8) sont respectivement 229,8 THz (L7) et 229 THz (L8).

5. Procédé selon l'une quelconque des revendications 1 à 4, dans lequel la fibre optique (1602) est une fibre monomode standard, SSMF.

6. Système de communication optique (1900) comprenant une extrémité d'émission (1901) et une extrémité de réception (1902), l'extrémité d'émission (1901) étant connectée à l'extrémité de réception (1902) par l'intermédiaire d'une fibre optique (1602) ; et
l'extrémité d'émission (1901) étant configurée pour exécuter le procédé selon l'une quelconque des revendications 1 à 5, et l'extrémité de réception (1902) étant configurée pour recevoir le signal optique de multiplexage par répartition en longueur d'onde.

7. Dispositif de communication optique (1600 ; 1901), configuré pour réaliser le procédé selon l'une quelconque des revendications 1 à 5.
